# EUROPEAN PATENT SPECIFICATION

(11) **EP 3 157 830 B1**
(45) Date of publication and mention of the grant of the patent: **11.09.2019**
(21) Application number: 15719651.0
(22) Date of filing: 22.04.2015
(51) Int. Cl.: B65D 33/16

(54) **METHOD OF MANUFACTURING AN OPENING AND CLOSURE DEVICE AND A PACKAGING CONTAINER HAVING SUCH OPENING AND CLOSURE DEVICE**
VERFAHREN ZUR HERSTELLUNG EINER ÖFFNUNGS- UND SCHLIESSVORRICHTUNG UND VERPACKUNGSBEHÄLTER MIT SOLCH EINER ÖFFNUNGS- UND SCHLIESSVORRICHTUNG
PROCÉDÉ DE FABRICATION D'UN DISPOSITIF D'OUVERTURE ET DE FERMETURE ET RÉCIPIENT D'EMBALLAGE PRÉSENTANT UN TEL DISPOSITIF D'OUVERTURE ET DE FERMETURE

(30) Priority: 19.06.2014 SE 1450774; 19.06.2014 SE 1450773
(43) Date of publication of application: 26.04.2017
(73) Proprietor: Tetra Laval Holdings & Finance S.A., 1009 Pully (CH)
(72) Inventor: PERSSON, Jens, 218 46 Bunkeflostrand (SE); HÅKANSSON, Bengt, 275 95 Sjöbo (SE)
(74) Representative: Tetra Pak - Patent Attorneys SE
(86) International application number: PCT/EP2015/058622
(87) International publication number: WO 2015/193001

(56) References cited:
- EP-A1- 2 612 825
- WO-A1-2012/062806
- CH-A1- 701 361
- DE-U1-202006 019 841
- US-A- 186 827
- US-A- 3 815 810
- US-A1- 2008 056 623
- US-A1- 2011 075 954
- US-E- R E33 674

## Description

### TECHNICAL FIELD

Described herein are an opening and closure device according to the preamble of claim 1 and a method of manufacturing an opening and closure device.

### BACKGROUND OF THE INVENTION

Packaging containers of the single use disposable type for liquid foods are often produced from a packaging material based on paperboard or carton. One such commonly occurring packaging container is marketed under the trademark Tetra Fino ® Aseptic and is principally employed for aseptic packaging of liquid foods such as milk, fruit juices etc, marketed and sold for long term ambient storage. The packaging material in this known packaging container is typically a laminate comprising a bulk layer of paper or paperboard and outer, liquid-tight layers of thermoplastics. In order to render the packaging container gas-tight, in particular oxygen gas-tight, for example for the purpose of aseptic packaging such as packaging of milk or fruit juice, the laminate in these packaging containers normally comprises at least one additional such gas barrier layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat-sealable adhesive polymers and/or heat-sealable polyolefins. Also on the outside of the paper or paperboard bulk layer, there is an outermost heat-sealable polymer layer (decor layer). The heat-sealable polymer layers are often based on low density polyethylene or blends thereof.

The packaging containers are generally produced by means of modern, high-speed packaging machines of the type that continuously form, fill and seal packages from a web or from prefabricated blanks of packaging material, e.g. Tetra Fino ® Aseptic- type packaging machines. Packaging containers may thus be produced by the so-called form-fill-seal technology basically including continuous reforming a web of the laminated packaging material by means of a filling machine which forms, fills and seals the web into packages. More specifically, a continuous tube is formed from the web-fed packaging material; the web of packaging material is sterilized by applying a chemical sterilizing agent, such as a hydrogen peroxide solution, which, once sterilization is completed, is removed from the surfaces of the packaging material, e.g. evaporated by heating; and the web of packaging material so sterilized is maintained in a closed, sterile environment, and is formed into a vertical tube by sealing the longitudinal edges of the tube in an overlapping seal. The tube is filled with the food product, and is sealed and subsequently cut along equally spaced transverse seal zones to form cushion-shaped or pillow-shaped packing containers.

An aspect of the Tetra Fino® -type packaging method is, as stated above, the possibility of continuous high-speed packaging, which has considerable impact on cost efficiency. Typically many thousands of packages may be prepared per hour. For example the Tetra Pak ® A1 may manufacture about 10 000 packaging containers per hour (packaging containers of 0,5 litres or more), and about 15 000 packaging containers per hour (portion packages).

The Tetra Fino ® Aseptic packaging containers are, as mentioned above, cushion-shaped or pillow shaped and commonly such packaging containers have an opening and closure device that is generally provided in the form of a straw hole, or simply as a cut indicator, which is facilitated by a rather thin and thus tearable packaging material being used. Using conventional opening and closure devices such as for example those comprising screw caps or pull-tabs would in most cases be fully functional. However, the type of packaging container is a high-volume (in terms of packaging containers per time unit) and low-cost packaging container (due to the properties of the packaging material), and such opening and closure devices might hamper the production speed and be detrimental for the cost of the packaging container.

US 3 815 810 discloses an opening and closure device with a container comprising the features of the preamble of claim 1.

For this reason there is a need for an opening and closure device having a high efficiency in regard of the amount of material used and the time needed for production of each opening and closure device. It should be emphasized that even if the present invention was developed to solve a specific problem, the outcome may be applied to packages in a general sense and it should not be limited to a particular type of packages in this respect.

### OBJECTS OF THE INVENTION

At least the above described need is solved by the present invention.

According to a first aspect, the invention comprises an opening and closure device with a packaging container for liquid or semi-liquid food, as claimed in claim 1.

According to a second aspect, the invention comprises a method of manufacturing a packaging container with an opening and closure device, as claimed in claim 19.

### BRIEF DESCRIPTION OF THE DRAWINGS

Further advantages and favorable characterizing features will be apparent from the following detailed description. Equal or corresponding elements are denominated by the same reference numbers in all figures. The features described in connection with the different embodiments can be combined as far as technically possible. The embodiments will be described with reference to the appended figures, in which:
Fig. 1 is a schematic planar view of a first embodiment of an opening and closure device according to the invention,
Fig. 2 is a schematic view of a portion of a packaging container provided with the opening and closure device of Fig. 1.
Fig. 3 is a schematic view of a front face of a packaging container provided with the opening and closure device of Figs. 1 and 2.
Fig. 4 is a schematic view of a back face of the packaging container of Fig. 3.
Fig. 5 is a schematic view of a portion of the packaging container provided with the opening and closure device according to the first embodiment, in which the opening and closure device is shown in an opened state.
Fig. 6 is a schematic view of the packaging container portion shown in Fig. 5, in a state in which the opening and closure device is to be re-closed.
Fig. 7 is a schematic view of the packaging container portion shown in Fig. 5, in a state in which the opening and closure device is re-closed.
Fig. 8 is a schematic planar view of a second embodiment of the opening and closure device which does not form part of the invention.
Fig. 9 is a schematic view of the packaging container portion shown in Fig. 8, in a state in which the opening and closure device is to be re-closed.
Fig. 10 is a schematic view of the packaging container portion shown in Fig. 8, in a state in which the opening and closure device is re-closed.

### DETAILED DESCRIPTION OF EMBODIMENTS

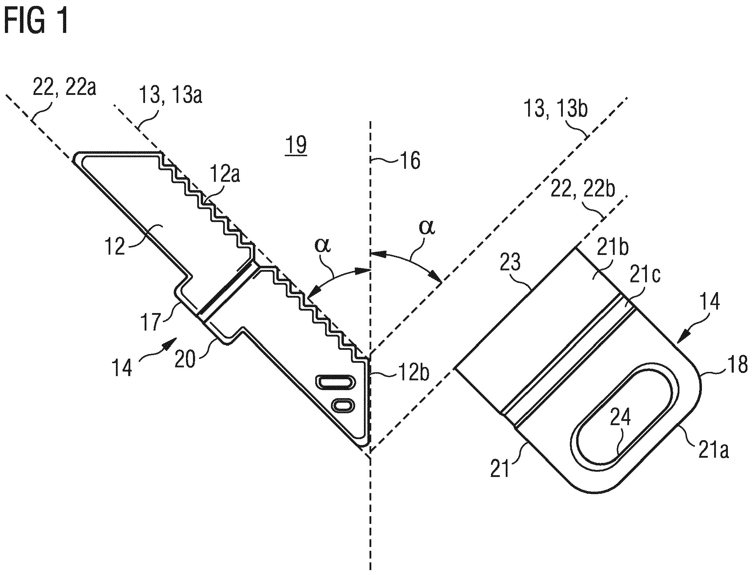

Fig. 1 shows a first embodiment of an opening and closure device of the invention. The opening and closure device is denoted 10 and comprises an opening device 12 and a closure device 14. The opening and closure device 10 will be described with reference to a first fold line 16 and an opening line 13 of a packaging container, which lines will be further described later. The first fold line 16 and the opening line 13 intersect in an intersection point, and said intersection point divides the opening line 13 into a first opening line portion 13a and a second opening line portion 13b. In addition to the first fold line 16 and the opening line 13, there is provided a second fold line 22 being parallel to the opening line 13. The first fold line 16 divides the second fold line 22 into a first fold line portion 22a and a second fold line portion 22b. During re-closure of the packaging container the second fold line 22 will be used.

The opening line 13, the first fold line 16 and the second fold line 22 are imaginary lines not necessarily shown on the packaging container, but used herein for facilitating description of the invention.

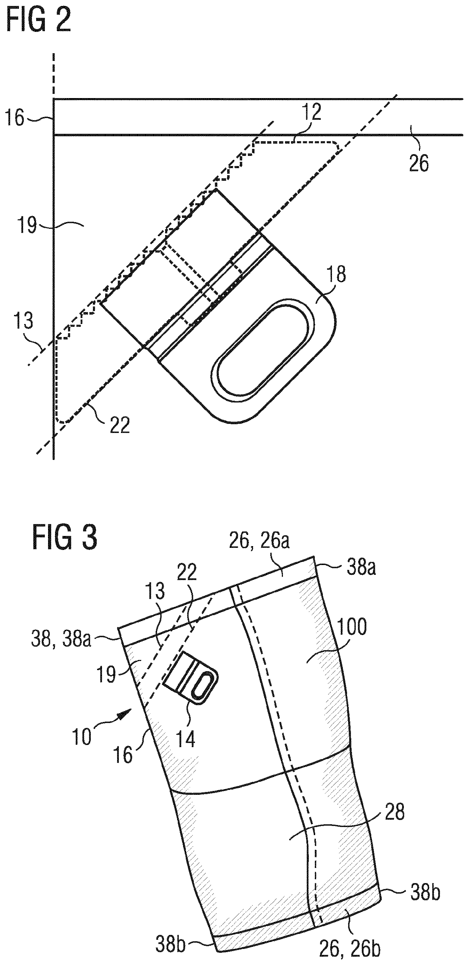

The opening device 12 is arranged on a first, left side of the first fold line 16. Further it is arranged on a first, lower side of the opening line 13. Said opening device 12 has an opening edge 12a that is at least partly aligned along, and on the lower side of, the first opening line portion 13a. A second side of the opening line 13 comprises an openable area 19 of the packaging container (better shown in Fig. 3).

The opening device 12 is elongate and parallel to the first opening line portion 13a. The opening edge 12a, which is provided in the vicinity of the opening line portion 13a, is serrated or toothed for facilitating rupture of the packaging material.

The closure device 14 comprises a first closure device part 17 and a second closure device part 18. Said first and second closure device parts 17, 18 are provided on different sides of the first fold line 16.

Said first and second closure device parts 17, 18 are provided with mutual lockable members 20, 21 such that the first and second closure device parts 17, 18 may be releasably locked to each other.

As mentioned the opening line 13 is an imaginary line along which the opening and closure device 10 will be opened, i.e. along which the packaging material of the packaging container will be ruptured or torn. The first fold line 16 is a longitudinal imaginary line along which the opening and closure device 10 can be folded during opening. It will also be described later that the first fold line 16 constitutes a side edge of the packaging container 100.

In this first embodiment the first opening line portion 13a is angled an angle a in relation to the first fold line 16. Similarly, the second opening line portion 13b is angled an angle a in relation to the first fold line 16. The angle may be in the range 20-90°, particularly 45-90°. Together the first and second opening line portions 13a, 13b together form an obtuse V-shape.

In the first embodiment the opening device 12 is further comprising a fold edge 12b. The fold edge 12b is aligned along the first fold line 16, i.e. it is parallel to the first fold line 16. Further, the fold edge 12b is arranged at a first distance from the first fold line 16. The distance is in the range of 1-2 mm. The distance facilitates folding of the opening and closure device 10 around the first fold line 16.

Furthermore, the opening edge 12a of the opening device 12 is arranged at a second distance from the opening line 13. The distance is in the range of 0,2-1 mm. The distance facilitates rupture of the packaging material along the opening line 13.

Furthermore, the opening device 12 is provided in between the first opening line portion 13a and the first fold line portion 22a, on a first side of the second fold line 22.

The closure device 14 comprises, as mentioned above, first and second closure device parts 17, 18. In this embodiment the first closure device part 17 forms part of the opening device 12. The first closure device part 17 is a first lockable member 20 formed as at least one protrusion. Hence, the first closure device part 17 forms an integrated portion of the opening device 12, and protrudes from the opening device 12. It extends, or protrudes, past the second fold line 22 to a second side of the second fold line 22.

As can be seen from Fig. 1 the first closure device part 17 is centered with regard to the opening device 12 and with regard to the opening device's extension along the first opening line portion 13a. Further, the protrusion is freely suspended from or detachable from the packaging material, i.e. it is not adhered or attached to the packaging material as much as the rest of the opening device 12.

The second closure device part 18 is provided on a second side of the first fold line 16 and on a second side of the second fold line 22. It comprises a second lockable member 21 provided with a loop portion 21a and an attachment portion 21b. The loop portion 21a is freely suspended from or detachable from the packaging material of the packaging container, i.e. it is not adhered or attached to the packaging material as much as the attachment portion 21b.

A first edge 23 of the attachment portion 21b is aligned, and parallel to, the second fold line 22. The loop portion 21a is distanced from the second fold line 22 a distance corresponding to the distance between the opening line 13 and the second fold line 22, by means of the attachment portion 21b. The attachment portion 21b is attached or adhered to the packaging container 100.

Further, there is provided a hinge area 21c between the loop portion 21a and the attachment portion 21b. The hinge area 21c is parallel to the first edge 23 of the attachment portion 21b.

The loop portion 21a is provided with a through-going opening 24. In this embodiment the opening 24 is oblong, and designed such that the protrusion of the first lockable member 20 is adapted to be inserted into said opening 24 for locking the first and the second lockable members 20, 21 together.

Fig. 2 shows the opening and closure device 10 according to the first embodiment, but in a folded state. Folding has been made at the first fold line 16, i.e. along or around the first fold line 16. The opening and closure device 10 is arranged on a packaging container 100 of which only a portion is shown in the figure. The opening and closure device 10 is provided in an upper corner of the packaging container, as is best seen in Fig. 3, and close to an upper transverse seal zone 26. The opening device 12 provided with the first closure device part 17 is positioned on a back face of the packaging container, and is hence only shown in hidden lines, whereas the second closure device part 18 of the closure device 14 is positioned on a front face of the packaging container. As can be further seen in the figure is that the first opening line portion 13a coincides with the second opening line portion 13b. As described before the opening line 13 and the second fold line 22 are angled with regard to the first fold line 16, and the opening device 12 extends from the first fold line 16 to an upper transverse seal zone 26, such that the openable area 19 is triangular and formed as a corner.

Preferably, the opening and closure device 10 is injection-moulded or glued onto the packaging material, preferably to what will become the outside surface of a packaging container. The material thickness t of the opening and closure device 10, in a direction perpendicular to the packaging material surface, is in the range of approximately 0,2 -2 mm. However, the thickness may be made larger than 2 mm, but the opening and closure device would then require more material, thereby increasing cost. The corresponding packaging material thickness used for this type of opening and closure device is today in the range of approximately 0,2 - 1,5 mm. However, the opening and closure device may be provided on thinner as well as thicker packaging materials.

Fig. 3 shows a packaging container 100 provided with an opening and closure device 10. The opening and closure device shown is of a type according to the first embodiment.

The packaging container 100 is made of a longitudinal tube of packaging material which has been sealed off in the ends by first and second transverse seal zones 26 to form a cushion-shape. In the seal zones inner heat sealable layers of the packaging material have been sealed together to form a tight seal. As the packaging containers are of the pouch type it does not have any defined longitudinal edges. However, at outermost edges 38 of the transverse seal zones 26 the packaging material is folded, since the transverse sealing is made transverse to a tube. The first fold line 16 previously referred to is an imaginary line extending longitudinally from an upper outermost edge 38a of a first transverse seal zone 26a to a corresponding, lower outermost edge 38b of a second transverse seal zone 26b. The first fold line 16 extends the shortest possible distance between the edges 38a, 38b. The second closure device part 18 is arranged on a first, front face 28 of the packaging container 100 and the first closure device part 17 and the opening device 12 are arranged on a second, back face 30 of the packaging container 100.

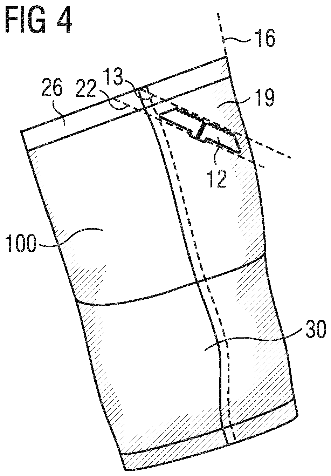

Fig. 4 shows the packaging container of Fig. 3 from the other side, i.e. from the second, back face 30.

The packaging container 100 is filled with a liquid or semi-liquid food product. The term "liquid or semi-liquid food" generally refers to food products having a flowing content that optionally may contain pieces of food. Dairy and milk, soy, rice, grains and seed drinks, juice, nectar, still drinks, energy drinks, sport drinks, coffee or tea drinks, coconut water, tea drinks, wine, soups, jalapenos, tomatoes, sauce (such as pasta sauce), beans and olive oil are some example of food products contemplated.

With reference to Figs. 3-4 it will in the following be described how the opening and closure device 10 of the present invention can be used for opening the packaging container 100. The opening and closure device embodiment referred to is the one shown in Fig. 1, but it is to be understood that the opening technique is basically similar for embodiments to be described later.

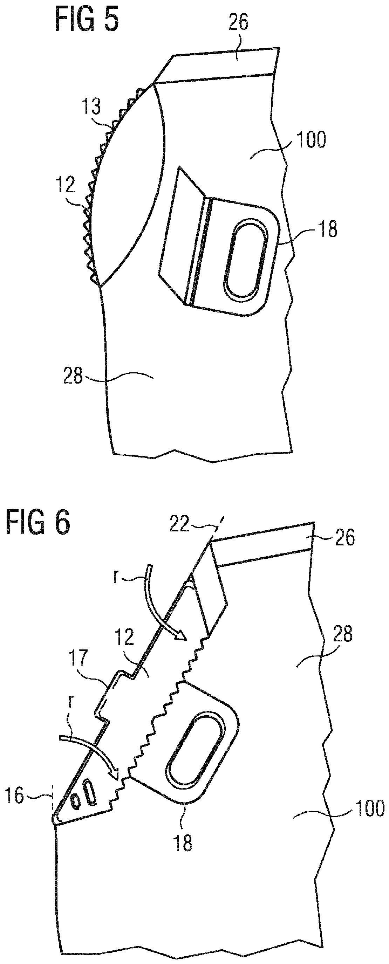

Upon opening a consumer will typically grip above the opening line 13, around the first fold line 16, with the index finger and the thumb of one hand, i.e. gripping on the opening device 12 with the index finger, and similarly grip around the first fold line 16, below the opening line 13, with the other hand. By doing so the consumer can fold the opening and closure device 10 at the first fold line 16. By further forcing the packaging material of the front and back face 28, 30 towards the serrated edge 12a, the packaging material is initially broken in the intersection point. The serrated edge 12a will then facilitate rupture of the packaging material along the opening line 13. Hence, opening along the opening line 13 will open the packaging container 100 cross one of the upper corners thereof, and the corner piece may be removed. An opened state of the packaging container 100 is shown in Fig. 5. As can be seen everything above the serrated edge 12a has been removed, and the packaging container is ready to pour from.

To further facilitating the rupture along the opening line 13 it may be considered to provide the opening line as a weakening line, such as for example a line at which one or more of the packaging material layers have been perforated or in other way been weakened.

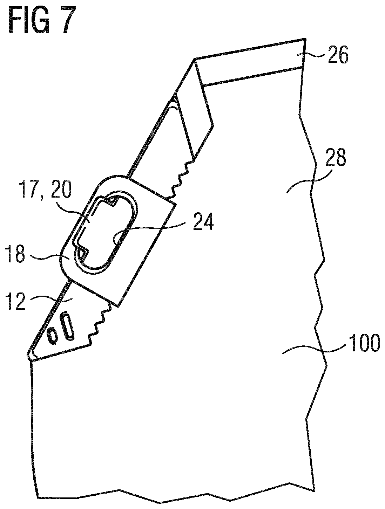

Re-closure of the opened packaging container 100 will now be made in relation to Fig. 6. By means of the closure device 14 the packaging container is re-closable. A first step towards re-closure is to fold the opening device 12 over the second fold line 22 following arrows r. The attachment portion 21b will then be hidden inside the fold whereas the loop portion 21a will still be visible on the front face 28 of the packaging container 100. The serrated edge of the opening device 12 will be aligned with the hinge area 21c. A second, and final, step towards re-closure is to lock the lockable members 20, i.e. in this case force the loop portion 21a over the protrusion of the first closure device part 17. As seen in the figure the protrusion will be freely extending from the opening device 12 and pointing upwards in the figure. The loop portion 21a, and in particular the opening 24 can be pulled, by means of the hinge area 21c, upwards towards the protrusion. The re-closed state is shown in Fig. 7. The lockable members 20 have here been releasably locked to each other, and may released again as desired.

The lockable members 20 can be any of a large variety of types, for example the locking function can be mechanical such as for example as a snap lock, or snap fit, solution, either in points or along a line, the latter being similar to a conventional zip lock. Further, it can be chemical or a combination of mechanical and chemical such for example a locking function based on surface friction or surface adherence. In this embodiment the lockable members are shaped for mechanical locking. The protrusion is insertable in the loop and will stay there until released.

Although the opening and closure device 10 is attached to the packaging material of the packaging container it is advantageous if the protrusion and the loop portion 21a is easily detachable from the packaging material such that the consumer can easily pull the loop over the protrusion. If the opening and closure device is moulded, which will be described later, onto the packaging material the mould may be cooled locally at the lockable members. Another alternative is that the packaging material is locally coated with a material that will cause less adhesion between the packaging material and the lockable members.

Going back to Fig. 1 again it is shown that the opening device 12 is provided with a relief or recess pattern for improved gripping. Preferably, the pattern is a recess pattern rather than a relief pattern, meaning that the opening device 12 has recesses in which the material thickness is less than the material thickness of the rest of the opening device 12, in order to use as little polymer material as possible. The pattern is provided in the area of the opening device 12 being closest to the first fold line 16.

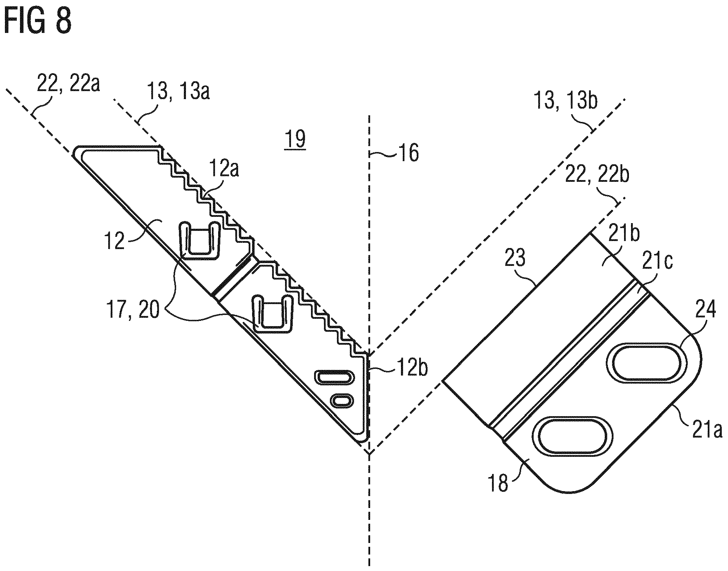

In the following, and with reference to Figs. 8-10, a second embodiment of the opening and closure device 10 will be described. The opening and closure device is very similar to the one of the first embodiment, and only the differences will be described. The main difference is the design of the lockable members 20. The loop portion 21a of the second closure device part 18 has two openings 24 instead of one. The openings are oblong and inclined with regard to the hinge area 21c. The opening device 12 is provided with a first closure device part 17 comprising lockable members 20 arranged as two protrusions 25 shaped as pins and protruding from the face of the opening device 12, i.e. protruding in a direction perpendicular to the drawing paper. The distance between the centres of the protrusions are equal to the distance between the centres of the openings 24.

Similar to the first embodiment, the second embodiment, which does not form part of the invention, is opened by folding the opening and closure device 10 at the first fold line 16, and by then forcing the packaging material of the front and back face 28, 30 towards the serrated edge 12a. The serrated edge 12a will facilitate rupture of the packaging material along the opening line 13, and the corner of the packaging container may be removed such that the packaging container is ready for pouring.

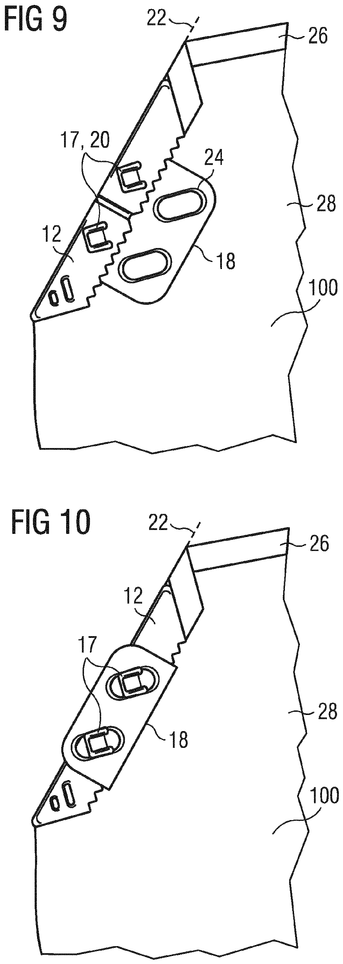

Re-closure of the opened packaging container 100 is also made in a similar way, see Figs. 9 and 10. A first step towards re-closure is shown in Fig. 9, and it is shown that the opening device 12 is folded at the second fold line 22 following arrows r, i.e. the opening device 12 is folded such that it is visible on the front face 28 of the packaging container 100. The attachment portion 21b will then be hidden inside the fold whereas the loop portion 21a will still be visible on the front face 28 of the packaging container 100. The serrated edge of the opening device 12 will be aligned with the hinge area 21c. In a second, and final, step towards re-closure the lockable members 20 are realeasbly locked. In this second embodiment this means that the loop portion 21a, with its two openings 24, are forced over the protrusions 25 of the first closure device part 17. The protrusions and the openings function as a snap lock or snap fit. The re-closed state is shown in Fig. 10. The lockable members 20 have here been releasably locked to each other, and may released again as desired.

In the following manufacturing of the packaging container with the opening and closure device will be described.

A first step of the method is to provide a packaging material. The packaging material generally comprises a bulk layer, which on a first side has a polymeric layer. The bulk layer can be a paper or paperboard layer. The bulk layer is arranged to provide for the greatest contribution to the flexural rigidity of the laminate. The paper or paperboard used herein has a typical grammage between 50-250 g/m², particularly between 60-220 g/m², depending on the requirement for different types of packaging containers. The grammage of the paperboard is assessed in accordance with ISO 536. Grammage expresses weight per unit area and is measured in g/m². The paper or paperboard normally has a thickness between 80-300 µm, particularly between 90-290 µm 80-660 µm, and is appropriately selected in order to obtain the desired stiffness suitable for the type of packaging container and the intended food product. The bulk layer thickness can be assessed by microscopy. It is however also conceivable that the bulk layer of the packaging material instead is a polyolefin bulk layer, made e.g. of polyethylene, polypropylene or copolymers of ethylene or propylene, such as, for example, ethylene-propylene, ethylene-butene, ethylene-hexene, ethylene-alkyl(meth)acrylate or ethylene-vinyl acetate copolymers, or PET (polyethylene terephthalate) bulk layer.

The polymeric layer is a décor layer which is to be the outer side of the filled and sealed packaging container. The side of the bulk layer, e.g. paper or paperboard, which is to be the outer side of the closed and sealed packaging container can contain a print covered by the decor layer. The decor layer is a heat-sealable polyolefin layer facing the surrounding environment of the resulting packaging container. Suitable polyolefins are polyethylene of the low density type, selected from the group consisting of LDPE, LLDPE, VLDPE, ULDPE or mLLDPE and blends of two or more thereof, optionally other polyolefins such as high density polyethylene (HDPE), polypropylene or propylene co- or ter-polymers are useful as the layer facing the surroundings. The decor layer provides additional protection and stability to the packaging container.

In addition, the packaging material comprises an innermost heat-sealable layer of a heat-sealable polyolefin polymer which is applied as a layer to be directed towards the inside of the packaging container, i.e. in direct food contact. The heat-sealable layer for the innermost layer may suitably be a polyethylene polymer of the low density type, selected from the group consisting of LDPE, LLDPE, VLDPE, ULDPE or mLLDPE and blends of two or more thereof. Depending on the type of packaging containers produced from the packaging material, also heat-sealable innermost layers of high density polyethylene, polypropylene or propylene co- or ter-polymers are conceivable.

Furthermore, the packaging material may comprise a barrier layer, such as an oxygen barrier, for instance aluminium foil, as well as suitable adhesion layers to increase adherence between the layers. The barrier layer is arranged by help of a laminate layer on the side opposite the bulk layer and has an adhesive on the side opposite the laminate layer. The adhesive depends on the type of bulk layer and the barrier layer and are within the capacity of those skilled in the art to select.

One exemplary packaging material comprises a decor layer which on one side of the layer has a paperboard layer, said paperboard layer, on the side opposite the decor layer has a laminate layer, said laminate layer, on the side opposite the paperboard layer has an oxygen barrier, said oxygen barrier, on the side opposite the laminate layer has an adhesive, and said adhesive, on the side opposite the oxygen barrier has a heat-sealable layer.

Laminated packaging materials are obtained by various methods for laminating layers together, such as extrusion lamination, dry adhesive lamination, heat-pressure lamination, and may also be including various coating methods. Although to achieve the benefits the particular lamination technique is not crucial it is considered to be of particular use in extrusion lamination to produce laminated packaging materials, in particular carton-based packages used for food such as liquid and semi-liquid food.

The term "heat-sealing" used above refers to the process of sealing of a thermoplastic material with another. Thus a heat-sealable material should be able to generate a seal when put in contact with another suitable thermoplastic material under the appropriate conditions such as when applying sufficient heating. Suitable heating can be achieved by induction heating or ultrasonic heating or other heating means.

A second step in the manufacturing method is that of moulding the opening and closure device onto the first side of the packaging material. As described in relation to the various embodiments above said opening and closure device comprises at least an opening device 12 and a closure device 14. The opening device 12 is arranged on a first side of a fold line 16 of the packaging container, and the second closure device part 18 of the closure device 14 is arranged on a second side of the first fold line 16. The moulding step comprises the sub-steps of arranging, on the first side of the packaging material, a first mould portion comprising at least a first mould cavity, arranging a second mould portion on the other side of the packaging material, positioned opposite the first mould portion, injecting a plastic melt into the first mould cavity, and removing the first and the second mould portions. The material of the opening and closure device 10 is suitable for thermoplastic moulding, more specifically injection moulding, and may be polyethylene, polypropylene or another plastic suitable for injection moulding, for example polyethylene terephthalate. The first side of the packaging material is the side which will become the outer side of the packaging container, the first side having the décor layer. The heat of the melt will anchor or weld the opening and closure device to the outer décor layer of the packaging material.

The first mould portion, or mould half has, as described above, at least one mould cavity. The first mould portion may comprise several cavities depending on the opening and closure device, preferably one cavity per isolated part. The embodiment shown in Fig. 1 may require two mould cavities due to the two separate parts. The second mould portion, or mould half, is preferably flat and will support the packaging material such that it is not ruptured by the moulding pressure. The mould portions are arranged in register on opposite sides of the packaging material, and a melt is injected in at least one position into the first mould cavity. If there are several mould cavities several injection points may be used. During the injection process the flow rate will be essentially constant and the amount of plastic being injected will correspond to the volume of the mould cavity. The optimum flow rate may vary with design of the opening and closure device, properties of the packaging material, properties of the plastic used, etc. yet in a presently operational embodiment the cycle time is less than about 300 ms (milliseconds), i.e., about three opening and closure devices per second may be manufactured by a single mould. Cycle times of 250-1000 ms are feasible, including indexing of the packaging material.

The dimensions of the opening and closure device 10 may be optimized to achieve an adequate opening of the packaging container only and any surplus use of material may be avoided. In this way only a relatively small amount of plastic is needed (compared to known opening devices). This has the beneficial effect that the time needed for injection is small, yet it also has the effect that the mould does not have to be closed for very long since the plastic will start to freeze (or solidify) immediately. The small amount of plastic vouches for that even if only a surface layer has started to freeze, this will be enough to retain the shape of the opening and closure device until it has fully frozen, which in turn implies that the mould will be opened basically as soon as the injection is finalized. An outermost skin layer of the plastic melt will freeze as soon as it contacts the walls of a mould cavity, or the outermost layer of the packaging material. For non-complex designs this vouches for that the mould may be opened as soon as it is filled. For more complex designs, e.g. designs incorporating steep edges or distinct ridges more time may have to be allocated for the plastic to freeze, such that the plastic is allowed to solidify from the skin and inwards before opening the mould. In this context it should be understood that the plastic will shrink (from the outside and inwards) as it freezes, and in a conventional injection molding process it is known to continue to inject plastic during the freezing, such that the finished detail is a replica of the mould cavity. It may also be important to realize that the longer the mould remains closed, the more heat will be transferred from the melt to the mould. This results in a need for installing a cooling arrangement, such as channels for leading cooling fluid through the mould portions. For the present invention such arrangements may not be necessary due to the inherently low cycle times.

Though there is no drawing of a mould or mould cavity the skilled person realizes that the shape of the mould cavity will correlate to the shape of the manufactured opening and closure device (or rather - vice versa), and since the present invention is not directed to the shaping of mould cavities this will not be described any further. Also, injection moulding is a well-established technique not the least for some of the suggested materials: PE, PP and PET. Therefore a disclosure of an injection moulding process or features thereof is not considered essential for the skilled person to apply the present invention, and it is therefore omitted.

After moulding, the packaging material comprises the opening and closure device and it is time to form the packaging material into packaging containers. The packaging material is formed into a tube by sealing overlapping longitudinal edges thereof. Either the packaging material is loaded into the filling machine as a continuous web which will be formed into several packaging containers, or the packaging material is loaded to the filling machine as blanks. In the latter case a sleeve-formed tube is formed by each blank.

The next steps are filling and sealing. In the case of a packaging material in the form of a blank, the sleeve-formed tube is in one end sealed along a transverse seal zone and thereby filled with the liquid or semi-liquid food product. The still open end is then sealed along a transverse seal zone.
In the case of a web-based filling machine, like for instance the Tetra Fino ® Aseptic- type packaging machine the tube is continuously filled and sealed along transverse mutually apart seal zones to form cushion-shaped packaging containers. In this case the method further comprises the step of separating the packaging containers from the tube by incisions in the seal zones.

Each transverse seal is made such that the packaging material is folded around the fold line 16 in the seal zones 26. Further, the position of the opening and closure devices in relation to the transverse sealing inductors are controlled such that an opening and closure device is positioned on each package and preferably in one corner of the finished packaging container, see Fig. 3. A such position facilitates pouring from the packaging container.

It is apparent to a person skilled in the art that with the advancement of technology, the basic idea may be implemented in various ways. The invention and its embodiments are thus not limited to the examples described above; instead they may vary within the scope of the claims.

## Claims

1. Opening and closure device (10) with a packaging container (100) for liquid or semi-liquid food, said packaging container (100) being made of packaging material and having a first fold line (16) and an opening line (13), said first fold line (16) and opening line (13) intersect in an intersection point, said intersection point dividing the opening line into a first opening line portion (13a) and a second opening line portion (13b), wherein the opening and closure device (10) comprises
an opening device (12) adapted for facilitating rupture of the packaging material along the opening line (13), when arranged on the packaging container, said opening device (12) has an opening edge (12a) that is at least partly aligned along the first opening line portion (13a) and arranged on a first side of the opening line (13), wherein a second side of the opening line (13) comprises an openable area (19) of the packaging container, such that a consumer can fold the opening and closure device (10) at the first fold line (16) and force the packaging material of the opening line (13) against the opening edge (12a) to facilitate rupture of the packaging material along the opening line (13), and wherein the opening and closure device further comprises
a closure device (14) adapted for re-closing the packaging container (100) after opening along the opening line (13), said closure device (14) comprises at least a first closure device part (17) and a second closure device part (18), said first and second closure device parts (17, 18) being provided on different sides of the first fold line (16) when arranged on the packaging container, and said first and second closure device parts (17, 18) being provided with a first and second mutual lockable member (20, 21) such that the first and second closure device parts (17, 18) may be releasably locked to each other, after folding the opening device (12) along a second fold line (22),
wherein the opening device (12) is provided with the first closure device part (17), **characterized in that** the opening device (12) is entirely provided in between the first opening line portion (13a) and a first fold line portion (22a), on a first side of the second fold line (22), and at least the first lockable member (20) extends past the second fold line (22) to a second side of the second fold line (22).

2. The opening and closure device according to claim 1, wherein the opening edge (12a) of the opening device is parallel with the second fold line (22).

3. The opening and closure device (10) according to claim 1 or 2, wherein the opening device (12) has a fold edge (12b) that is at least partly aligned along the first fold line (16) and arranged on a first side of the first fold line.

4. The opening and closure device (10) according to any of the preceding claims, wherein the opening edge (12a) is toothed or serrated.

5. The opening and closure device (10) according to any of the preceding claims, wherein the opening and closure device (10) is made of a polymeric material and the opening and closure device is injection molded onto the packaging container before forming of the packaging container.

6. The opening and closure device according to any of the preceding claims, wherein the first lockable member (20) is formed as at least one protrusion, and wherein the second lockable member (21) is provided with a loop portion (21a) and an attachment portion (21b), and wherein the at least one protrusion of the first lockable member (20) is adapted to be inserted into at least one opening of the loop portion (21a) of the second lockable member (21) for locking the first and the second lockable members (20, 21) together.

7. The opening and closure device according to claim 6, wherein the loop portion (21a) and the first lockable member (20) are freely suspended from or detachable from the packaging material of the packaging container.

8. The opening and closure device (10) according to claim 6 or 7, wherein the loop portion (21a) is distanced from the second fold line (22) a distance corresponding to the distance between the opening line (13) and the second fold line (22), by means of the attachment portion (21b), which attachment portion (21b) is attached to the packaging container (100).

9. The opening and closure device (10) according to any of the claims 6-8, wherein there is provided a hinge area (21c) between the loop portion (21a) and the attachment portion (21b).

10. The opening and closure device (10) according to any of the claims 6-9, wherein the first lockable member (20) is formed as a protrusion extending past the second fold line (22) to a second side of the second fold line (22).

11. The opening and closure device according to any of the preceding claims, wherein the packaging container (100) is made of a longitudinal tube of packaging material which has been sealed off in the ends by top and bottom transverse seal zones (26) to form a cushion-shape,

12. The opening and closure device according to claim 11, wherein the packaging container has a top transverse seal zone (26), the first fold line (16) forms a side edge of the packaging container, such that the second closure device part (18) is arranged on a first face (28) of the packaging container and the first closure device part (17) and the opening device (12) are arranged on a second face (30) of the packaging container (100).

13. The opening and closure device according to claim 12, wherein the opening device (12) extends between the first fold line (16) and the top transverse seal zone (26).

14. The opening and closure device according to any of the claims 11-13, wherein the openable area (19) is a corner of the packaging container (100).

15. The opening and closure device according to any of the claims 12-14, wherein the closure device (10) extends along a portion of the opening line (13) and the second fold line (22), particularly more than 80% of the distance from the first fold line (16) to the upper transverse seal zone (26).

16. The opening and closure device (10) according to claim 11, wherein the first opening line portion (13a) is arranged to coincide with the second opening line portion (13b) when the opening and closure device (10) is folded along the first fold line (16).

17. The opening and closure device (10) according to claim 11, wherein each of the first and second opening line portions (13a, 13b) is angled an angle (α) with respect to the first fold line (16), and wherein the second opening line portion (13b) is a mirror of the first opening line portion (13a) around the first fold line (16).

18. The opening and closure device (10) according to claim 11, wherein the second fold line (22) is parallel to the opening line (13), and wherein the intersection point divides the second fold line (22) into a first fold line portion (22a) and a second fold line portion (22b).

19. A method of manufacturing a packaging container (100) with an opening and closure device (10), according to one of claims 1-18, said method comprises the steps of:
providing a packaging material comprising a bulk layer, which on a first side has a polymer layer,
moulding the opening and closure device onto the first side of the packaging material, said opening and closure device comprises an opening device (12) and a closure device (14), wherein the opening device (12) and a first closure device part (17) of the closure device (14) is arranged on a first side of a first fold line (16) of the packaging container, and a second closure device part (18) of the closure device (14) is arranged on a second side of the first fold line (16), thereby obtaining a packaging material comprising the opening and closure device (10),
forming the packaging material into a tube by sealing overlapping longitudinal edges thereof,
filling the tube with a liquid or semi-liquid food product,
sealing the tube along transverse seal zones (26) to form a cushion-shaped packaging container, said sealing being made such that the packaging material is folded around the first fold line (16) in the seal zones (26), and such that the opening and closure device (10) is positioned in one corner of the packaging container.

20. The method according to claim 19, wherein the step of moulding comprises the steps of:
arranging, on the first side of the packaging material, a first mould portion comprising at least a first mould cavity,
arranging a second mould portion on the other side of the packaging material, positioned opposite the first mould portion,
injecting a plastic melt into the first mould cavity, and
removing the first and the second mould portions.

21. The method according to claim 19 or 20, wherein the packaging material is a web for forming more than one packaging container, and the step of sealing comprises sealing the tube along transverse mutually apart seal zones to form cushion-shaped packaging containers, and the method further comprises the step of separating the packaging containers from the tube by incisions in the seal zones.

## Patentansprüche

1. Öffnungs- und Schließvorrichtung (10) mit einem Verpackungsbehälter (100) für flüssige oder halbflüssige Nahrungsmittel, wobei der Verpackungsbehälter (100) aus Verpackungsmaterial gefertigt ist und eine erste Faltlinie (16) und eine Öffnungslinie (13) aufweist, wobei sich die erste Faltlinie (16) und die Öffnungslinie (13) in einem Schnittpunkt schneiden, wobei der Schnittpunkt die Öffnungslinie in einen ersten Öffnungslinienabschnitt (13a) und einen zweiten Öffnungslinienabschnitt (13b) unterteilt, wobei die Öffnungs- und Schließvorrichtung (10) Folgendes umfasst: eine Öffnungsvorrichtung (12), die dazu ausgelegt ist, einen Bruch des Verpackungsmaterials entlang der Öffnungslinie (13) zu ermöglichen, wenn sie am Verpackungsbehälter angeordnet ist, wobei die Öffnungsvorrichtung (12) eine Öffnungskante (12a) aufweist, die zumindest teilweise entlang des ersten Öffnungslinienabschnitts (13a) ausgerichtet und an einer ersten Seite der Öffnungslinie (13) angeordnet ist, wobei eine zweite Seite der Öffnungslinie (13) einen zu öffnenden Bereich (19) des Verpackungsbehälters umfasst, sodass ein Verbraucher die Öffnungs- und Schließvorrichtung (10) an der ersten Faltlinie (16) falten und das Verpackungsmaterial der Öffnungslinie (13) gegen die Öffnungskante (12a) drücken kann, um einen Bruch des Verpackungsmaterials entlang der Öffnungslinie (13) zu ermöglichen, und wobei die Öffnungs- und Schließvorrichtung ferner Folgendes umfasst:
eine Schließvorrichtung (14), die dazu ausgelegt ist, den Verpackungsbehälter (100) nach dem Öffnen entlang der Öffnungslinie (13) wiederzuverschließen, wobei die Schließvorrichtung (14) zumindest ein erstes Schließvorrichtungsteil (17) und ein zweites Schließvorrichtungsteil (18) umfasst, wobei das erste und das zweite Schließvorrichtungsteil (17, 18) auf unterschiedlichen Seiten der ersten Faltlinie (16) bereitgestellt sind, wenn sie am Verpackungsbehälter angeordnet sind, und wobei das erste und das zweite Schließvorrichtungsteil (17, 18) mit einem ersten und einem zweiten miteinander verriegelbaren Element (20, 21) bereitgestellt sind, sodass das erste und das zweite Schließvorrichtungsteil (17, 18) nach dem Falten der Öffnungsvorrichtung (12) entlang einer zweiten Faltlinie (22) lösbar miteinander verriegelt werden können,
wobei die Öffnungsvorrichtung (12) mit dem ersten Schließvorrichtungsteil (17) bereitgestellt ist,
**dadurch gekennzeichnet, dass**
die Öffnungsvorrichtung (12) vollständig zwischen dem ersten Öffnungslinienabschnitt (13a) und einem ersten Faltlinienabschnitt (22a) auf einer ersten Seite der zweiten Faltlinie (22) bereitgestellt ist und sich zumindest das erste verriegelbare Element (20) über die zweite Faltlinie (22) hinaus zu einer zweiten Seite der zweiten Faltlinie (22) erstreckt.

2. Öffnungs- und Schließvorrichtung nach Anspruch 1, wobei die Öffnungskante (12a) der Öffnungsvorrichtung parallel zur zweiten Faltlinie (22) ist.

3. Öffnungs- und Schließvorrichtung (10) nach Anspruch 1 oder 2, wobei die Öffnungsvorrichtung (12) eine Faltkante (12b) aufweist, die zumindest teilweise entlang der ersten Faltlinie (16) ausgerichtet und auf einer ersten Seite der ersten Faltlinie angeordnet ist.

4. Öffnungs- und Schließvorrichtung (10) nach einem der vorangehenden Ansprüche, wobei die Öffnungskante (12a) gezahnt oder geriffelt ist.

5. Öffnungs- und Schließvorrichtung (10) nach einem der vorangehenden Ansprüche, wobei die Öffnungs- und Schließvorrichtung (10) aus einem Polymermaterial gefertigt ist und die Öffnungs- und Schließvorrichtung vor dem Ausbilden des Verpackungsbehälters auf den Verpackungsbehälter spritzgegossen ist.

6. Öffnungs- und Schließvorrichtung nach einem der vorangehenden Ansprüche, wobei das erste verriegelbare Element (20) als zumindest ein Vorsprung ausgebildet ist, und wobei das zweite verriegelbare Element (21) mit einem Schleifenabschnitt (21a) und einem Befestigungsabschnitt (21b) bereitgestellt ist und wobei der zumindest eine Vorsprung des ersten verriegelbaren Elements (20) dazu ausgelegt ist, in zumindest eine Öffnung des Schleifenabschnitts (21a) des zweiten verriegelbaren Elements (21) eingeführt zu werden, um das erste und das zweite verriegelbare Element (20, 21) miteinander zu verriegeln.

7. Öffnungs- und Schließvorrichtung nach Anspruch 6, wobei der Schleifenabschnitt (21a) und das erste verriegelbare Element (20) vom Verpackungsmaterial des Verpackungsbehälters frei hängen oder lösbar sind.

8. Öffnungs- und Schließvorrichtung (10) nach Anspruch 6 oder 7, wobei der Schleifenabschnitt (21a) mit Hilfe des Befestigungsabschnitts (21b) um einen Abstand, der dem Abstand zwischen der Öffnungslinie (13) und der zweiten Faltlinie (22) entspricht, von der zweiten Faltlinie (22) beabstandet ist, wobei der Befestigungsabschnitt (21b) am Verpackungsbehälter (100) befestigt ist.

9. Öffnungs- und Schließvorrichtung (10) nach einem der Ansprüche 6 - 8, wobei zwischen dem Schleifenabschnitt (21a) und dem Befestigungsabschnitt (21b) ein Gelenkbereich (21c) bereitgestellt ist.

10. Öffnungs- und Schließvorrichtung (10) nach einem der Ansprüche 6 - 9, wobei das erste verriegelbare Element (20) als ein Vorsprung ausgebildet ist, der sich über die zweite Faltlinie (22) hinaus zu einer zweiten Seite der zweiten Faltlinie (22) erstreckt.

11. Öffnungs- und Schließvorrichtung nach einem der vorangehenden Ansprüche, wobei der Verpackungsbehälter (100) aus einem länglichen Schlauch aus Verpackungsmaterial gefertigt ist, der an den Enden durch eine obere und eine untere Querabdichtungszone (26) abgedichtet wurde, um eine Kissenform auszubilden.

12. Öffnungs- und Schließvorrichtung nach Anspruch 11, wobei der Verpackungsbehälter eine obere Querabdichtungszone (26) aufweist, wobei die erste Faltlinie (16) eine Seitenkante des Verpackungsbehälters ausbildet, sodass das zweite Schließvorrichtungsteil (18) an einer ersten Fläche (28) des Verpackungsbehälters angeordnet ist und das erste Schließvorrichtungsteil (17) und die Öffnungsvorrichtung (12) an einer zweiten Fläche (30) des Verpackungsbehälters (100) angeordnet sind.

13. Öffnungs- und Schließvorrichtung nach Anspruch 12, wobei sich die Öffnungsvorrichtung (12) zwischen der ersten Faltlinie (16) und der oberen Querabdichtungszone (26) erstreckt.

14. Öffnungs- und Schließvorrichtung nach einem der Ansprüche 11 - 13, wobei der zu öffnende Bereich (19) eine Ecke des Verpackungsbehälters (100) ist.

15. Öffnungs- und Schließvorrichtung nach einem der Ansprüche 12 - 14, wobei sich die Schließvorrichtung (10) entlang eines Abschnitts der Öffnungslinie (13) und der zweiten Faltlinie (22), insbesondere mehr als 80 % des Abstands von der ersten Faltlinie (16) zur oberen Querabdichtungszone (26), erstreckt.

16. Öffnungs- und Schließvorrichtung (10) nach Anspruch 11, wobei der erste Öffnungslinienabschnitt (13a) so angeordnet ist, dass der mit dem zweiten Öffnungslinienabschnitt (13b) deckungsgleich ist, wenn die Öffnungs- und Schließvorrichtung (10) entlang der ersten Faltlinie (16) gefaltet ist.

17. Öffnungs- und Schließvorrichtung (10) nach Anspruch 11, wobei jeder des ersten und des zweiten Öffnungslinienabschnitts (13a, 13b) unter einem Winkel (α) in Bezug auf die erste Faltlinie (16) abgewinkelt ist und wobei der zweite Öffnungslinienabschnitt (13b) eine Spiegelung des ersten Öffnungslinienabschnitts (13a) um die erste Faltlinie (16) ist.

18. Öffnungs- und Schließvorrichtung (10) nach Anspruch 11, wobei die zweite Faltlinie (22) parallel zur Öffnungslinie (13) ist und wobei der Schnittpunkt die zweite Faltlinie (22) in einen ersten Faltlinienabschnitt (22a) und einen zweiten Faltlinienabschnitt (22b) teilt.

19. Verfahren zum Fertigen eines Verpackungsbehälters (100) mit einer Öffnungs- und Schließvorrichtung (10) nach einem der Ansprüche 1 - 18, wobei das Verfahren die folgenden Schritte umfasst:
Bereitstellen eines Verpackungsmaterials, das eine Bulkschicht umfasst und auf einer ersten Seite eine Polymerschicht aufweist,
Gießen der Öffnungs- und Schließvorrichtung auf die erste Seite des Verpackungsmaterials, wobei die Öffnungs- und Schließvorrichtung eine Öffnungsvorrichtung (12) und eine Schließvorrichtung (14) umfasst, wobei die Öffnungsvorrichtung (12) und ein erstes Schließvorrichtungsteil (17) der Schließvorrichtung (14) auf einer ersten Seite einer ersten Faltlinie (16) des Verpackungsbehälters angeordnet sind und ein zweites Schließvorrichtungsteil (18) der Schließvorrichtung (14) auf einer zweiten Seite der ersten Faltlinie (16) angeordnet ist, wodurch ein Verpackungsmaterial erhalten wird, das die Öffnungs- und Schließvorrichtung (10) umfasst,
Formen des Verpackungsmaterials zu einem Schlauch durch Abdichten überlappender Längskanten desselben,
Füllen des Schlauchs mit einem flüssigen oder halbflüssigen Nahrungsmittelprodukt,
Abdichten des Schlauchs entlang von Querabdichtungszonen (26), um einen kissenförmigen Verpackungsbehälter auszubilden, wobei das Abdichten so erfolgen kann, dass das Verpackungsmaterial um die erste Faltlinie (16) in den Abdichtzonen (26) gefaltet wird, und so, dass die Öffnungs- und Schließvorrichtung (10) in der Ecke des Verpackungsbehälters positioniert ist.

20. Verfahren nach Anspruch 19, wobei der Schritt des Gießens die folgenden Schritte umfasst:
Anordnen eines ersten Formabschnitts, der zumindest einen ersten Formhohlraum umfasst, auf einer ersten Seite des Verpackungsmaterials,
Anordnen eines zweiten Formabschnitts auf der anderen Seite des Verpackungsmaterials, der gegenüber dem ersten Formabschnitt positioniert ist,
Einspritzen einer Kunststoffschmelze in den ersten Formhohlraum und
Entfernen des ersten und des zweiten Formabschnitts.

21. Verfahren nach Anspruch 19 oder 20, wobei das Verpackungsmaterial eine Bahn zum Ausbilden von mehr als einem Verpackungsbehälter ist und wobei der Schritt des Abdichtens das Abdichten des Schlauchs entlang von quer voneinander getrennten Abdichtzonen umfasst, um kissenförmige Verpackungsbehälter auszubilden, und wobei das Verfahren ferner den Schritt des Trennens der Verpackungsbehälter vom Schlauch durch Schnitte in den Abdichtzonen umfasst.

## Revendications

1. Dispositif d'ouverture et de fermeture (10) pour un conteneur d'emballage (100) pour de la nourriture liquide ou semi-liquide, ledit conteneur d'emballage (100) étant constitué d'un matériau d'emballage et comportant une première ligne de pliage (16) et une ligne d'ouverture (13), ladite première ligne de pliage (16) et la ligne d'ouverture (13) se croisant à un point d'intersection, ledit point d'intersection divisant la ligne d'ouverture en une première partie de ligne d'ouverture (13a) et une seconde partie de ligne d'ouverture (13b), le dispositif d'ouverture et de fermeture (10) comprenant
un dispositif d'ouverture (12) conçu pour faciliter la rupture du matériau d'emballage le long de la ligne d'ouverture (13), lorsqu'il est disposé sur le conteneur d'emballage, ledit dispositif d'ouverture (12) comportant un bord d'ouverture (12a) qui est au moins en partie aligné le long de la première partie de ligne d'ouverture (13a) et disposé sur un premier côté de la ligne d'ouverture (13), dans lequel un second côté de la ligne d'ouverture (13) comprend une zone ouvrable (19) du conteneur d'emballage, de sorte qu'un consommateur peut plier le dispositif d'ouverture et de fermeture (10) au niveau de la première ligne de pliage (16) et forcer le matériau d'emballage de la ligne d'ouverture (13) contre le bord d'ouverture (12a) pour faciliter la rupture du matériau d'emballage le long de la ligne d'ouverture (13), et dans lequel le dispositif d'ouverture et de fermeture comprend en outre
un dispositif de fermeture (14) conçu pour refermer le conteneur d'emballage (100) après l'ouverture le long de la ligne d'ouverture (13), ledit dispositif de fermeture (14) comprenant au moins une première partie de dispositif de fermeture (17) et une seconde partie de dispositif de fermeture (18), lesdites première et seconde parties de dispositif de fermeture (17, 18) étant agencées sur différents côtés de la première ligne de pliage (16) lorsqu'elles sont disposé sur le conteneur d'emballage, et lesdites première et seconde parties de dispositif de fermeture (17, 18) étant munies d'un premier et d'un second organe mutuel verrouillable (20, 21) de sorte que les première et seconde parties de dispositif de fermeture (17, 18) puissent être verrouillées l'une à l'autre de façon amovible, après le pliage du dispositif d'ouverture (12) le long d'une seconde ligne de pliage (22),
dans lequel le dispositif d'ouverture (12) est muni de la première partie de dispositif de fermeture (17),
**caractérisé en ce que** le dispositif d'ouverture (12) est entièrement ménagé entre la première partie de ligne d'ouverture (13a) et une première partie de ligne de pliage (22a), sur un premier côté de la seconde ligne de pliage (22), et au moins le premier organe verrouillable (20) s'étend au-delà de la seconde ligne de pliage (22) vers un second côté de la seconde ligne de pliage (22).

2. Dispositif d'ouverture et de fermeture selon la revendication 1, dans lequel le bord d'ouverture (12a) du dispositif d'ouverture est parallèle à la seconde ligne de pliage (22).

3. Dispositif d'ouverture et de fermeture (10) selon la revendication 1 ou 2, dans lequel le dispositif d'ouverture (12) comporte un bord de pliage (12b) qui est au moins en partie aligné le long de la première ligne de pliage (16) et disposé sur un premier côté de la première ligne de pliage.

4. Dispositif d'ouverture et de fermeture (10) selon l'une quelconque des revendications précédentes, dans lequel le bord d'ouverture (12a) est denté ou crénelé.

5. Dispositif d'ouverture et de fermeture (10) selon l'une quelconque des revendications précédentes, le dispositif d'ouverture et de fermeture (10) étant constitué d'un matériau polymère et le dispositif d'ouverture et de fermeture étant moulé par injection sur le conteneur d'emballage avant la formation du conteneur d'emballage.

6. Dispositif d'ouverture et de fermeture selon l'une quelconque des revendications précédentes, dans lequel le premier organe verrouillable (20) est formé sous forme d'au moins une saillie, et dans lequel le second organe verrouillable (21) est muni d'une partie de boucle (21a) et d'une partie de fixation (21b), et dans lequel l'au moins une saillie du premier organe verrouillable (20) est conçue pour être insérée dans au moins une ouverture de la partie de boucle (21a) du second organe verrouillable (21) pour verrouiller ensemble les premier et second organes verrouillables (20, 21).

7. Dispositif d'ouverture et de fermeture selon la revendication 6, dans lequel la partie de boucle (21a) et le premier organe verrouillable (20) sont librement suspendus ou détachables du matériau d'emballage du conteneur d'emballage.

8. Dispositif d'ouverture et de fermeture (10) selon la revendication 6 ou 7, dans lequel la partie de boucle (21a) est éloignée de la seconde ligne de pliage (22) d'une distance correspondant à la distance entre la ligne d'ouverture (13) et la seconde ligne de pliage (22), au moyen de la partie de fixation (21b), laquelle partie de fixation (21b) est fixée au conteneur d'emballage (100).

9. Dispositif d'ouverture et de fermeture (10) selon l'une quelconque des revendications 6 à 8, dans lequel une zone articulée (21c) est ménagée entre la partie de boucle (21a) et la partie de fixation (21b).

10. Dispositif d'ouverture et de fermeture (10) selon l'une quelconque des revendications 6 à 9, dans lequel le premier organe verrouillable (20) est formé sous forme d'une saillie s'étendant au-delà de la seconde ligne de pliage (22) vers un second côté de la seconde ligne de pliage (22).

11. Dispositif d'ouverture et de fermeture selon l'une quelconque des revendications précédentes, dans lequel le conteneur d'emballage (100) est constitué d'un tube longitudinal de matériau d'emballage qui a été scellé aux extrémités par des zones de scellement transversales supérieure et inférieure (26) pour former une forme de coussin.

12. Dispositif d'ouverture et de fermeture selon la revendication 11, dans lequel le conteneur d'emballage comporte une zone de scellement transversale supérieure (26), la première ligne de pliage (16) forme un bord latéral du conteneur d'emballage, de sorte que la seconde partie de dispositif de fermeture (18) soit disposée sur une première face (28) du conteneur d'emballage et que la première partie de dispositif de fermeture (17) et le dispositif d'ouverture (12) soient disposés sur une seconde face (30) du conteneur d'emballage (100).

13. Dispositif d'ouverture et de fermeture selon la revendication 12, dans lequel le dispositif d'ouverture (12) s'étend entre la première ligne de pliage (16) et la zone de scellement transversale supérieure (26).

14. Dispositif d'ouverture et de fermeture selon l'une quelconque des revendications 11 à 13, dans lequel la zone ouvrable (19) est un angle du conteneur d'emballage (100) .

15. Dispositif d'ouverture et de fermeture selon l'une quelconque des revendications 12 à 14, dans lequel le dispositif de fermeture (10) s'étend le long d'une partie de la ligne d'ouverture (13) et de la seconde ligne de pliage (22), en particulier sur plus de 80 % de la distance allant de la première ligne de pliage (16) à la zone de scellement transversale supérieure (26).

16. Dispositif d'ouverture et de fermeture (10) selon la revendication 11, dans lequel la première partie de ligne d'ouverture (13a) est disposée de façon à coïncider avec la seconde partie de ligne d'ouverture (13b) lorsque le dispositif d'ouverture et de fermeture (10) est plié le long de la première ligne de pliage (16).

17. Dispositif d'ouverture et de fermeture (10) selon la revendication 11, dans lequel chacune des première et seconde parties de ligne d'ouverture (13a, 13b) présente un angle (α) par rapport à la première ligne de pliage (16), et dans lequel la seconde partie de ligne d'ouverture (13b) est un miroir de la première partie de ligne d'ouverture (13a) autour de la première ligne de pliage (16).

18. Dispositif d'ouverture et de fermeture (10) selon la revendication 11, dans lequel la seconde ligne de pliage (22) est parallèle à la ligne d'ouverture (13), et dans lequel le point d'intersection divise la seconde ligne de pliage (22) en une première partie de ligne de pliage (22a) et une seconde partie de ligne de pliage (22b) .

19. Procédé de fabrication d'un conteneur d'emballage (100) comportant un dispositif d'ouverture et de fermeture (10) selon l'une quelconque des revendications 1 à 18, ledit procédé comprenant les étapes suivantes :
la fourniture d'un matériau d'emballage comprenant une couche de substrat, qui comporte une couche en polymère sur un premier côté,
le moulage du dispositif d'ouverture et de fermeture sur le premier côté du matériau d'emballage, ledit dispositif d'ouverture et de fermeture comprenant un dispositif d'ouverture (12) et un dispositif de fermeture (14), dans lequel le dispositif d'ouverture (12) et une première partie de dispositif de fermeture (17) du dispositif de fermeture (14) sont ménagés sur un premier côté d'une première ligne de pliage (16) du conteneur d'emballage, et une seconde partie de dispositif de fermeture (18) du dispositif de fermeture (14) est ménagée sur un second côté de la première ligne de pliage (16), ce qui permet d'obtenir un matériau d'emballage comprenant le dispositif d'ouverture et de fermeture (10),
la formation du matériau d'emballage en un tube par le scellement de ses bords longitudinaux se chevauchant,
le remplissage du tube par un produit alimentaire liquide ou semi-liquide,
le scellement du tube le long de zones de scellement transversales (26) pour former un conteneur d'emballage en forme de coussin, ledit scellement étant réalisé afin que le matériau d'emballage soit plié autour de la première ligne de pliage (16) dans les zones de scellement (26) et afin que le dispositif d'ouverture et de fermeture (10) soit positionné dans un angle du conteneur d'emballage.

20. Procédé selon la revendication 19, dans lequel l'étape de moulage comprend les étapes suivantes :
l'agencement, sur le premier côté du matériau d'emballage, d'une première partie de moulage comprenant au moins une première cavité de moule,
l'agencement d'une seconde partie de moule sur l'autre côté du matériau d'emballage, positionnée à l'opposé de la première partie de moule,
l'injection d'un plastique fondu dans la première partie de moule, et
le retrait des première et seconde parties de moule.

21. Procédé selon la revendication 19 ou 20, dans lequel le matériau d'emballage est une toile permettant de former plusieurs conteneurs d'emballage, et l'étape de scellement comprend le scellement du tube le long de zones de scellement transversales mutuellement séparées pour former des conteneurs d'emballage en forme de coussin, et le procédé comprend en outre l'étape de séparation des conteneurs d'emballage du tube au moyen d'incisions dans les zones de scellement.
